# EUROPÄISCHE PATENTSCHRIFT

(11) **EP 1 151 145 B1**
(45) Veröffentlichungstag und Bekanntmachung des Hinweises auf die Patenterteilung: **12.06.2002**
(21) Anmeldenummer: 00901588.4
(22) Anmeldetag: 22.01.2000
(51) Int. Cl.: C22C 13/02, F16C 33/12

(54) **GLEITLAGER**
PLAIN BEARING
PALIER LISSE

(30) Priorität: 09.02.1999 DE 19905213
(43) Veröffentlichungstag der Anmeldung: 07.11.2001
(73) Patentinhaber: SMS SCHLOEMANN-SIEMAG AKTIENGESELLSCHAFT, 40237 Düsseldorf (DE)
(72) Erfinder: ROEINGH, Konrad, D-57271 Hilchenbach (DE); GREIS, Werner, D-57223 Kreuztal (DE)
(74) Vertreter: Valentin, Ekkehard, Dipl.-Ing.
(86) Internationale Anmeldenummer: EP0000488
(87) Internationale Veröffentlichungsnummer: WO0047788

(56) Entgegenhaltungen:
- EP-A- 0 702 095
- EP-A- 0 717 121
- DD-A- 246 489

## Beschreibung

Die Erfindung betrifft ein Gleitlager für Zapfen von Walzwerkswalzen mit einer Lagerbuchse aus Metall und in diese eingebrachte Gleitlagerlegierung auf Zinn-Basis mit Antimon und Kupfer.

Derartige Lager werden z. B. als Ölfilm-Lager seit vielen Jahren hergestellt. Die verwendete Gleitlagerlegierung ist jedoch verhältnismäßig weich, wodurch diese unter Belastung leicht fließt. Dieses Fließen bewirkt einen Verlust der Formstabilität und erfordert ein verhältnismäßig schnelles Auswechseln der Lager gegen neue bzw. überarbeitete Lager. Hinzu kommt, daß die Druckfestigkeit der Gleitlagerlegierung verhältnismäßig klein ist.

Den bekannten Gleitlagerlegierungen wurde auch schon Cadmium beilegiert, wodurch die Druckfestigkeit angehoben werden konnte. Cadmiumhaltige Legierungen werden jedoch wegen Ihrer Giftigkeit trotz der Vorteile in Bezug auf die Druckfestigkeit nicht mehr verwendet. Es wurden daher wieder die bekannten Gleitlagerlegierungen angewandt.

Aus der EP 0 717 121 B1 sind Gleitlageriegierungen bekannt geworden, die unter Zusatz von Silber und Zink den Vorteil einer höheren Stauchgrenze und einer besseren Dauerschlagbiegebeanspruchung aufweisen. Diese neuen Legierungen finden vor allem Anwendung in Turbinen, Verdichtern, Kolben und Expansionsmaschinen. Vorteil ist, daß keine giftigen Bestandteile dem Gleitlager-Metall zulegiert werden. Der Einsatz dieser Legierung für Walzenzapfen war jedoch nicht ohne weiteres möglich, da nach diesem Stand der Technik die Legierungsanteile noch breit schwankten, wodurch die geforderte geringe Fließeigenschaft und die große Druckfestigkeit noch nicht in gewünschter Weise verwirklicht werden konnten.

Der Erfindung liegt die Aufgabe zugrunde, ein bekanntes Gleitlager sowie ein Verfahren zur Herstellung des Gleitlagers so zu verbessern, daß sich eine hervorragende Formstabilität infolge geringster Fließneigung und eine hohe Druckfestigkeit ergibt, so daß lange Lagerstandzeiten die Folge sind.

Dazu werden die Merkmale des Anspruchs 1 vorgeschlagen. Es hat sich herausgestellt, daß bei Verwendung einer derartigen Gleitlagerlegierung die Formstabilität erheblich verbessert und die Druckfestigkeit erhöht werden.

Von Vorteil ist jedoch, wenn bei der Erstellung der Gleitlager die Gleitlagerlegierung in einer Rohschichtdicke von 4 bis 7 mm durch Schleuderguß auf den Innenmantel der vorgeheizten Lagerbuchse aufgetragen wird. Bisher waren Rohschichtdicken von 8 bis 12 mm notwendig, um eine Fertigschichtdicke von 1,25 mm zu erhalten. Durch die Verringerung der Rohschichtdicke muß einerseits erheblich weniger Legierungsmaterial eingesetzt werden, wodurch eine kostengünstigere Herstellung des Lagers möglich ist, andererseits ergibt sich, daß erheblich weniger Legierungsmaterial gekühlt werden muß. Dadurch lassen sich schnellere Kühlzeiten und damit optimalere Gefügeumwandlungen erreichen, die sich vorteilhaft auf die Formstabilität und die Druckfestigkeit des Lagermaterials auswirken.

Hinzu kommt, daß bei der Bearbeitung des Gleitlagers durch Zerspanung von der Rohschichtdicke auf die Enddicke weniger Material abgenommen werden muß, wodurch sich der Arbeitsgang verkürzt. Es entstehen weniger Späne, die entsorgt werden müssen und die Bearbeitungsanlage wird kürzer und damit weniger beansprucht.

Die geringere Fließneigung und die höhere Druckfestigkeit bewirken, daß die Lager im Betrieb nicht so leicht und schnell verschleißen, wodurch längere Standzeiten erreicht werden. Die Lager müssen weniger häufig aufgearbeitet bzw. durch neue ersetzt werden. Auch beim Aufarbeiten kann wieder die erfindungsgemäße Legierung verwendet werden, so daß die Vorteile der geringen Fließneigung und hohen Druckfestigkeit auch für überarbeitete Lager gelten.

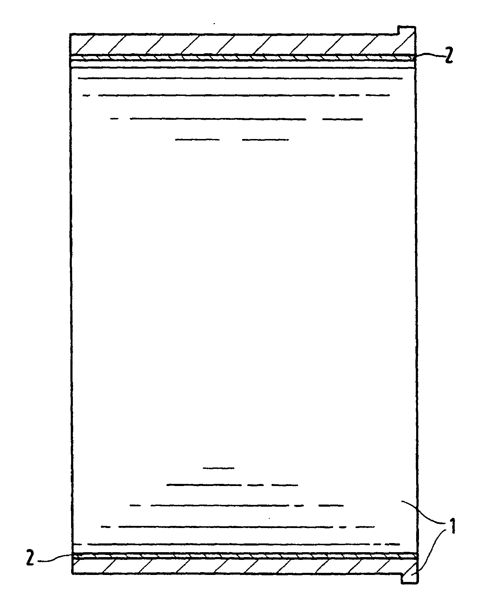

Die Erfindung wird anhand einer Zeichnung näher erläutert. Dabei zeigt die Figur eine Lagerbuchse 1, in die eine Gleitlagerlegierung 2 aus 7 Gew.-Prozent Antimon, 6,5 Gew.-Prozent Kupfer, 0,6 Gew.-Prozent Zink, 0,1 Gew. Prozent Silber und Zinn als Rest eingebracht ist und die von 4 bis 7 mm Rohschichtdikke auf eine Fertigschichtdicke von 0,5 bis 1,2 mm gedreht wurde.

## Patentansprüche

1. Gleitlager für die Zapfen von Walzwerkswalzen mit einer Lagerbuchse (1) aus Metall und in diese eingebrachte Gleitlagerlegierung (2) auf Zinn-Basis mit Antimon und Kupfer,
**dadurch gekennzeichnet,**
**daß** die Gleitlagerlegierung (2) aus 6,8 bis 7,2 Gew.-Prozent Antimon, 6,3 bis 6,7 Gew.-Prozent Kupfer, 0,5 bis 0,7 Gew.-Prozent Zink, 0,05 bis 0,15 Gew.-Prozent Silber und Zinn als Rest besteht.

2. Gleitlager nach Anspruch 1,
**dadurch gekennzeichnet,**
**daß** die Gleitlagerlegierung (2) aus 7 Gew.-Prozent Antimon, 6,5 Gew.-Prozent Kupfer, 0,6 Gew.-Prozent Zink, 0,1 Gew.-Prozent Silber und Zinn als Rest besteht.

3. Gleitlager nach Anspruch 1 oder 2,
**dadurch gekennzeichnet,**
**daß** die Fertigschichtdicke der Gleitlagerlegierung (2) zwischen 0,5 und 1,2 mm beträgt.

4. Verfahren zum Herstellen von Gleitlagern für Zapfen von Walzwerkswalzen nach einem der Ansprüche 1 bis 3,
**dadurch gekennzeichnet,**
**daß** die Gleitlagerlegierung (2) in einer Rohschichtdicke von 4 bis 7 mm durch Schleuderguß auf den Innenmantel der vorgeheizten Lagerbuchse (1) aufgetragen wird.

5. Verfahren nach Anspruch 4,
**dadurch gekennzeichnet,**
**daß** die Kühlung der Lagerbuchse (1) nach erfolgtem Schleuderguß mit mindestens 0,5° C/sec. erfolgt.

## Claims

1. Plain bearing for the spigots of rolling mill rolls with a bearing bush (1) of metal and slide bearing alloy (2), on a tin basis with antimony and copper, disposed therein, **characterised in that** the slide bearing alloy (2) consists of 6.8 to 7.2 weight percent of antimony, 6.3 to 6.7 weight percent of copper, 0.5 to 0.7 weight percent of zinc, 0.05 to 0.15 weight percent of silver and the rest tin.

2. Plain bearing according to claim 1, **characterised in that** the slide bearing alloy (2) consists of 7 weight percent of antimony, 6.5 weight percent of copper, 0.6 weight percent of zinc, 0.1 weight percent of silver and the rest tin.

3. Plain bearing according to claim 1 or 2, **characterised in that** the finished layer thickness of the slide bearing alloy (2) amounts to between 0.5 and 1.2 mm.

4. Method of producing slide bearings for the spigots of rolling mill rolls according to one of claims 1 to 3, **characterised in that** the slide bearing alloy (2) is applied in a raw layer thickness of 4 to 7 mm by centrifugal casting on the inner circumference of the preheated bearing bush.

5. Method according to claim 4, **characterised in that** the cooling of the bearing bush (1) takes place at at least 0.5° C/sec after the centrifugal casting has been carried out.

## Revendications

1. Palier lisse pour les tourillons de cylindres de laminoir, comprenant une douille de palier (1) en métal et un alliage à palier lisse (2) introduit dans cette douille, à base d'étain avec de l'antimoine et du cuivre,
**caractérisé en ce que** l'alliage à palier lisse (2) est formé de 6,8 à 7,2 % en poids d'antimoine, 6,3 à 6,7 % en poids de cuivre, 0,5 à 0, 7 % en poids de zinc, 0,05 à 0,15 % en poids d'argent, le reste étant de l'étain.

2. Palier lisse selon la revendication 1, **caractérisé en ce que** l'alliage à palier (2) est formé de 7 % en poids d'antimoine, 6,5 % en poids de cuivre, 0,6 % en poids de zinc, 0,1 % en poids d'argent, le reste étant de l'étain.

3. Palier lisse l'on l'une ou l'autre des revendications 1 et 2, **caractérisé en ce que** l'épaisseur finie de la couche d'alliage à palier (2) est comprise entre 0,5 et 1,2 mm.

4. Procédé pour la fabrication de paliers lisses pour les tourillons de cylindres de laminoir selon l'une des revendications 1 à 3,
**caractérisé en ce que** l'alliage à palier lisse (2) est appliqué avec une épaisseur de couche brute de 4 à 7 mm par coulée centrifuge sur l'enveloppe intérieure de la douille de palier préchauffée.

5. Procédé selon la revendication 4, **caractérisé en ce que** le refroidissement de la douille de palier (1) après avoir effectué la coulée centrifuge a lieu à une vitesse d'au moins 0,5°C/seconde.
